# EUROPEAN PATENT APPLICATION

(11) **EP 4 797 671 A1**
(43) Date of publication of application: **26.08.2026**
(21) Application number: 26155691.4
(22) Date of filing: 02.02.2026
(51) Int. Cl.: H04N 1/00, H04N 1/327, H04L 69/165

(54) **IMAGE READING APPARATUS**

(30) Priority: 19.02.2025 JP 2025025457
(71) Applicant: KYOCERA Document Solutions Inc., Osaka-shi, Osaka 540-8585 (JP)
(72) Inventor: KAKENO, Wataru, Osaka (JP)
(74) Representative: Herrero & Asociados, S.L.

(57) **Abstract**

An image reading apparatus (2) includes an operation device (16), a communication device (22), and a controller (10). The operation device (16) allows a user's instruction to be input. The communication device (22) performs communications via a network with an information processing device. When accepting specification of a port number through the operation device (16), the controller (10) allows the communication device (22) to use a specified port corresponding to the specified port number to send to-be-sent data to a shared folder on the information processing device. Upon failure to establish a connection with the information processing device using the specified port, the controller (10) allows the communication device (22) to use another port different from the specified port to send the to-be-sent-data to the shared folder.

## Description

### BACKGROUND

The present invention relates to image reading apparatuses and particularly relates to a technique for determining a port to be used for file transmission.

An image reading apparatus is known which uses an SMB (server message block) protocol to send an image file obtained by scanning to a specified shared folder and thus allows the image file to be saved in the folder. In such an image reading apparatus, file transmission is generally made using TCP port 445 (hereinafter, referred to as TCP/445 port).

Recently, there has emerged a standard (SMB over QUIC) for use in making SMB transmission using UDP port 443 (hereinafter, referred to as UDP/443 port). Furthermore, there has been introduced a technique in SMB transmission for making a file transmission using ports other than TCP/445 port and UDP/443 port.

As a technique for determining a port to be used, for example, a general technique is known in which when an application for an information receiving device is started up, a communication device is queried as to a port scheduled to be used and whether or not the port scheduled to be used is openable is determined based on a response to the query from the communication device, and when the port is determined to be openable, the port determined to be usable is used for communication to establish a connection.

### SUMMARY

A technique improved over the aforementioned techniques is proposed as one aspect of the present invention.

An image reading apparatus includes an operation device, a communication device, and a control device. The operation device allows a user's instruction to be input therethrough. The communication device performs communications via a network with an information processing device. The control device includes a processor and functions, through the processor executing a control program, as a controller that accepts specification of a port number through the operation device, allows the communication device to use a specified port corresponding to the specified port number to send to-be-sent data to be sent to a shared folder on the information processing device, and, upon failure to establish a connection with the information processing device using the specified port, allow the communication device to use another port different from the specified port to send the to-be-sent data to the shared folder.

### BRIEF DESCRIPTION OF THE DRAWINGS

FIG. 1 is a frontal cross-sectional view showing the structure of an image forming apparatus equipped with an image reading apparatus.
FIG. 2 is a block diagram showing an internal configuration of the image forming apparatus.
FIG. 3 is a view showing an example of a send screen.
FIG. 4 is a view showing an example of a port number setting screen.
FIG. 5A is a portion of a flowchart showing first file transmission processing.
FIG. 5B is another portion of the flowchart showing the first file transmission processing.
FIG. 5C is the rest of the flowchart showing the first file transmission processing.
FIG. 6 is a view showing an example of a notification screen.
FIG. 7 is a view showing another example of a port number setting screen.
FIG. 8A is a portion of a flowchart showing second file transmission processing.
FIG. 8B is another portion of the flowchart showing the second file transmission processing.
FIG. 8C is the rest of the flowchart showing the second file transmission processing.
FIG. 9 is a flowchart showing first connection processing.
FIG. 10A is a portion of a flowchart showing third file transmission processing.
FIG. 10B is another portion of the flowchart showing the third file transmission processing.
FIG. 10C is the rest of the flowchart showing the third file transmission processing.
FIG. 11 is a flowchart showing second connection processing.

### DETAILED DESCRIPTION

Hereinafter, a description will be given of an image reading apparatus according to each of embodiments of the present invention with reference to the drawings.

### (First Embodiment)

### [Structure and Configuration of Image Forming Apparatus 1]

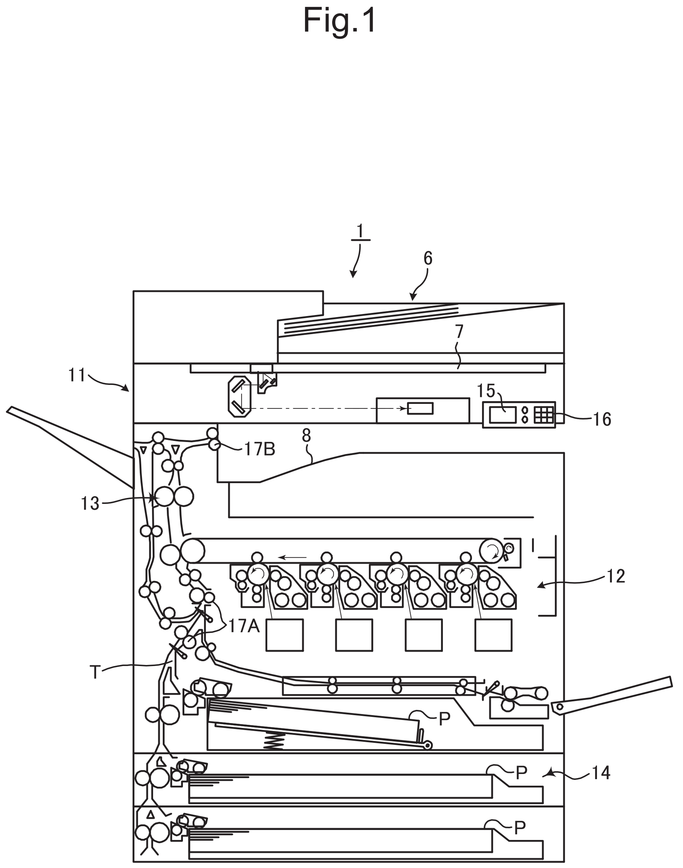

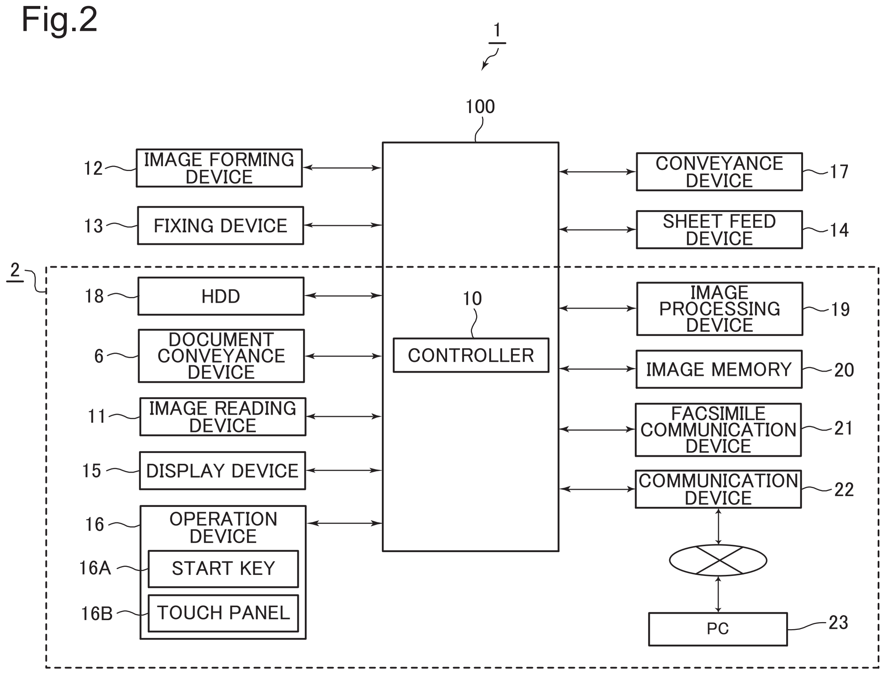

FIG. 1 is a frontal cross-sectional view showing the structure of an image forming apparatus 1 including an image reading apparatus 2 according to a first embodiment of the present invention. FIG. 2 is a block diagram showing an internal configuration of the image forming apparatus 1. Referring to FIGS. 1 and 2, the image forming apparatus 1 is a multifunction peripheral having multiple functions, such as a copy function, a transmission function, a print function, and a facsimile function.

The image forming apparatus 1 includes a document conveyance device 6, an image reading device 11, an image forming device 12, a fixing device 13, a sheet feed device 14, a display device 15, an operation device 16, a conveyance device 17, and so on.

The document conveyance device 6 conveys sheets of original document placed on a document loading table sheet by sheet to a reading position of the image reading device 11. The document conveyance device 6 is designed to be pivotally movable up and down about a horizontal pivot shaft located to the back side of the plane of FIG. 1 to make a platen glass 7 open and closed. The document conveyance device 6 functions also as a cover that holds down a sheet of original document on the platen glass 7.

The image reading device 11 is a scanner that irradiates a sheet of original document with light from a lighting device included therein, receives on a CCD (charge-coupled device) sensor included therein light reflected form the sheet of original document to optically read an image of the sheet of original document, and thus generates image data representing the image of the sheet of original document. The image reading device 11 reads a sheet of original document conveyed by the document conveyance device 6 or a sheet of original document placed on the platen glass 7.

The image forming device 12 includes a photosensitive drum, a charging device, an exposure device, a developing device, and a transfer device. The image forming device 12 forms a toner image on a sheet P being conveyed along a conveyance path T by the conveyance device 17, based on image data generated by the image reading device 11, image data received through the communication device 22 or other image data.

The fixing device 13 applies heat and pressure to the sheet P with the toner image formed thereon, thus fixing the toner image to the sheet P. The sheet P with the toner image fixed thereto and an image thus formed thereon is ejected to a sheet output tray 8.

The sheet feed device 14 includes a manual feed tray and a plurality of sheet feed cassettes. The sheet feed device 14 pulls out sheets P contained in either one of the plurality of sheet feed cassettes or sheets placed on the manual feed tray sheet by sheet with a pickup roller and feeds forward the pulled-out sheet to the sheet conveyance path T. The type of sheet P for use is not limited to a paper sheet and may be, for example, an OHP (overhead projector) sheet.

The display device 15 is, for example, a liquid crystal display or an organic EL (an organic light-emitting diode) display. The display device 15 displays various screens.

The operation device 16 includes a plurality of hardware keys, including a start key 16A for use in inputting an instruction to start execution of copy processing, SMB transmission processing, or so on. The operation device 16 further includes a touch panel 16B superposed on the display device 15. The operation device 16 allows a user's instruction to be input therethrough.

The conveyance device 17 includes conveyance roller pairs 17A, an ejection roller pair 17B, other like rollers, and a conveyance motor. When the conveyance roller pairs 17A, the ejection roller pair 17B, and so on are rotated by the drive of the conveyance motor, the sheet P fed forward by the sheet feed device 14 is conveyed along the conveyance path T.

Referring to FIG. 2, the image forming apparatus 1 further includes a control device 100, an HDD (hard disk drive) 18, an image processing device 19, an image memory 20, a facsimile communication device 21, and a communication device 22.

The control device 100 includes a processor, a RAM (random access memory), a ROM (read only memory), and so on. The processor is, for example, a CPU (central processing unit), an MPU (micro processing unit) or an ASIC (application specific integrated circuit).

When a control program stored in the ROM or the HDD 18 is executed by the above processor, the control device 100 functions as a controller 10. The controller 10 controls the respective operations of devices constituting the image forming apparatus 1. Alternatively, the controller 10 may not be implemented by the operation of the processor in accordance with the control program, but may instead be constituted by a logic circuit equivalent to the control program.

The control device 100 is electrically connected to the document conveyance device 6, the image reading device 11, the image forming device 12, the fixing device 13, the sheet feed device 14, the display device 15, the operation device 16, the conveyance device 17, the HDD 18, the image processing device 19, the image memory 20, the facsimile communication device 21, the communication device 22, and so on.

In this embodiment, the control device 100, the document conveyance device 6, the image reading device 11, the display device 15, the operation device 16, the HDD 18, the image processing device 19, the image memory 20, the facsimile communication device 21, and the communication device 22 function as the image reading apparatus 2.

The HDD 18 is a large-capacity storage device for use in storing various types of data. The HDD 18 stores various types of control programs for use in implementing general operations of the image forming apparatus 1. The HDD 18 holds as one of the control programs just described a first transmission program for use in executing first file transmission processing to be described later. The HDD 18 is an example of the storage device defined in CLAIMS.

The image processing device 19 performs, as necessary, image processing of image data generated by the image reading device 11. The image memory 20 temporarily stores image data generated by the image reading device 11. The facsimile communication device 21 transfers image data to and from other facsimile devices via the public line.

The communication device 22 includes a communication module, such as a LAN (local area network) board. The controller 10 performs data communications through the communication device 22 with external devices, such as a PC (personal computer) 23, connected thereto via a network.

Each of the devices constituting the image forming apparatus 1 is connected to a power supply. When the image forming apparatus 1 is powered on by the user, electric power is supplied from the power supply to each of the devices of the image forming apparatus 1.

### [Operation]

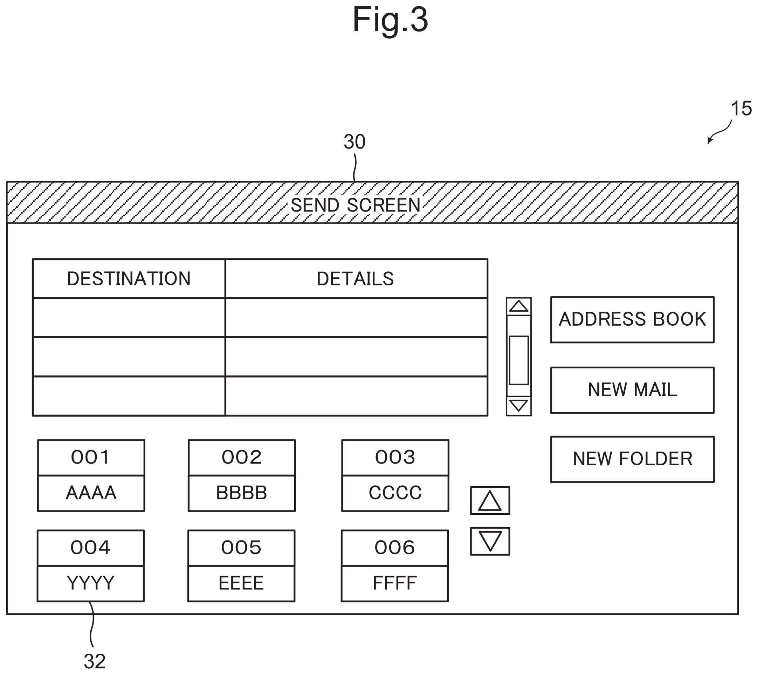

Hereinafter, a description will be given of the operation of the image forming apparatus 1 during execution and so on of the first file transmission processing with reference to FIGS. 3 to 6 and so on.

The image forming apparatus 1 has an SMB transmission function of sending an image file to a shared folder on an image processing device, such as the PC 23, and allowing it to be saved in the folder. When the user uses the operation device 16 to input an instruction to select the SMB transmission function, the controller 10 allows the display device 15 to display a send screen 30, as shown in FIG. 3, for use in configuring various settings on the SMB transmission function.

Assume that the user has confirmed the send screen 30 and has touched a key 32 with a single touch of which, for example, a previously registered destination (including at least the host name or IP address, the path of the shared folder, the user's ID, and the password) can be selected. When detecting a touch gesture on the key 32 through the touch panel 16B, the controller 10 allows the display device 15 to display a screen for use in inputting the user's ID and the password.

The user inputs the user's ID and the password using the touch panel 16B. When the user's ID and the password accepted through the touch panel 16B match those previously registered in association with the key 32, the controller 10 sets as the destination of the image file a shared folder previously registered in association with the key 32, for example, a shared folder on the PC 23.

On the other hand, when the user's ID and the password accepted through the touch panel 16B does not match those previously registered in association with the key 32, the controller 10 allows the display device 15 to display an error screen indicating that at least one of the input user's ID and password is incorrect.

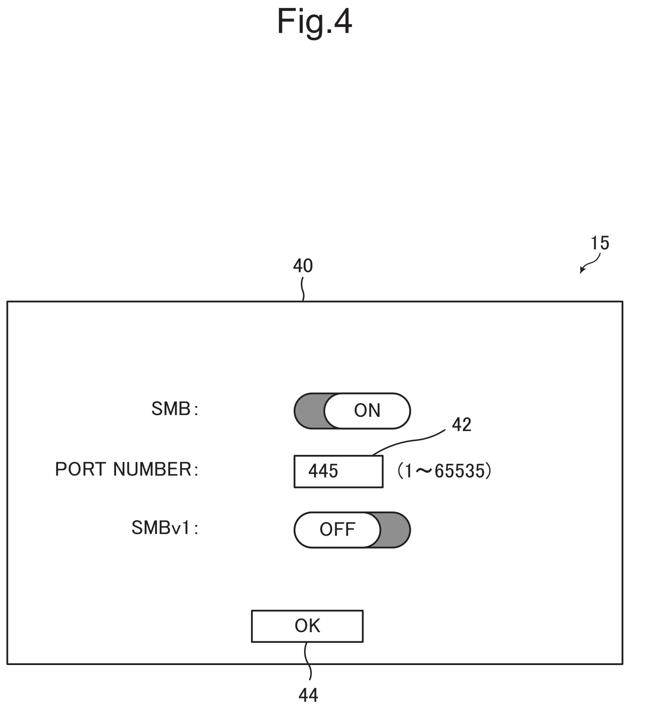

Upon completion of setting of the destination of the image file, the controller 10 allows the display device 15 to display a port number setting screen 40 shown in FIG. 4 for the purpose of setting a first port number. Herein, the first port number refers to a number for use in specifying a port that the user desires to use on a highest-priority basis (hereinafter, referred to as a "specified port").

The user touches a region 42 on the port number setting screen 40 and inputs, using the touch panel 16B, a first port number into the region 42. When accepting the input of the first port number through the touch panel 16B, the controller 10 allows the display device 15 to display the input first port number in the region 42.

The user confirms the displayed first port number and touches a determination key 44. When detecting a touch gesture on the determination key 44 through the touch panel 16B, the controller 10 accepts the specification of the input first port number.

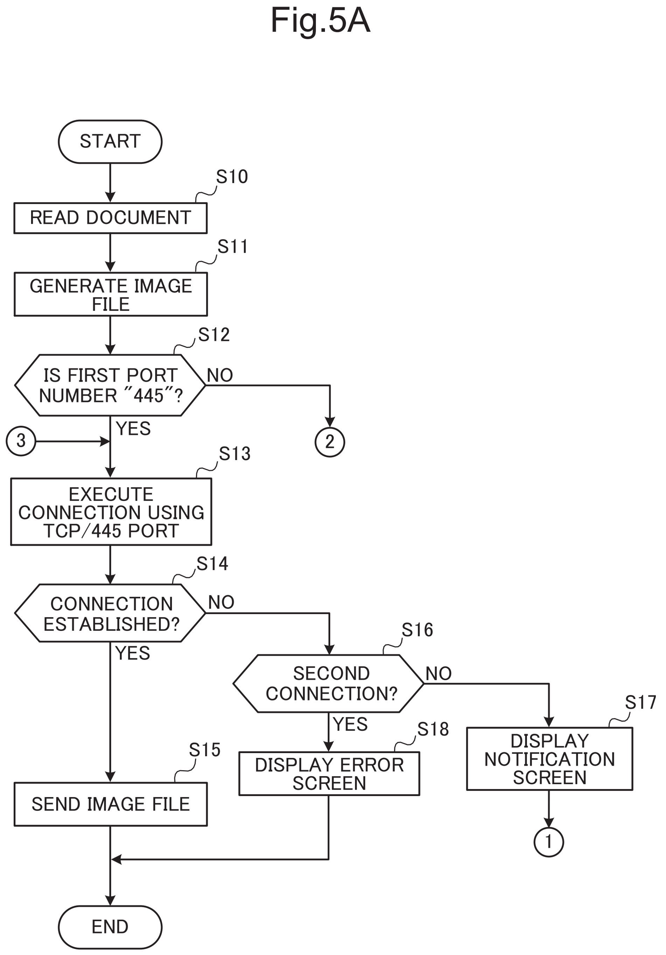

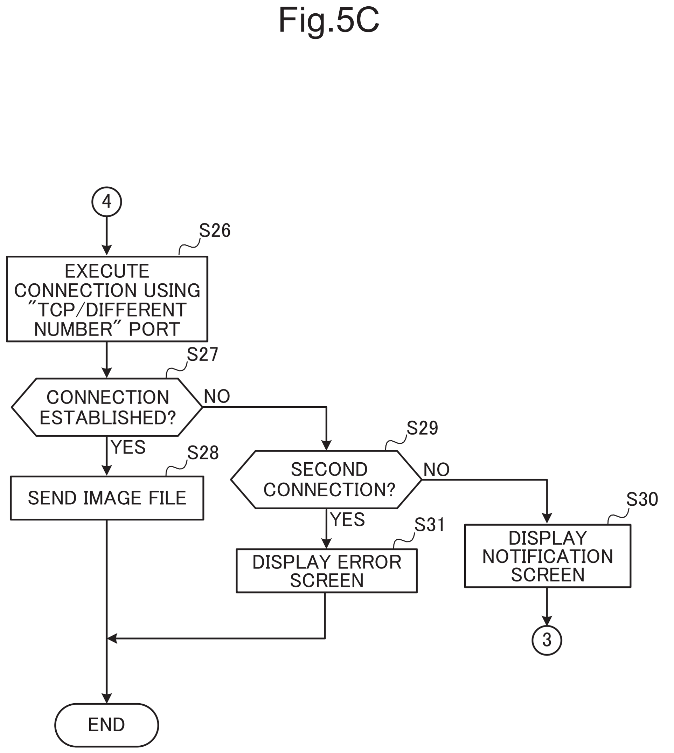

Assume that in the situation just described the user has placed a sheet of original document on the platen glass 7 of the image reading device 11 and has pressed the start key 16A. When detecting the pressing of the start key 16A, the controller 10 starts execution of the first file transmission processing shown in FIGS. 5A to 5C.

In the first file transmission processing, the controller 10 first allows the image reading device 11 to read the sheet of original document and generate image data representing the image of the sheet of original document (step S10). After the processing in step S10, the controller 10 uses the generated image data to generate, for example, an image file in PDF (portable document format) format (step S11).

### (1) Case Where Specification of First Port Number Indicating "445" Has Been Accepted

Now assume that a first port number indicating "445" has been input by a user's input operation on the port number setting screen 40 through the touch panel 16B and the controller 10 has accepted the specification of the first port number indicating "445".

In this case, after the processing in step S11, the controller 10 determines that the specification of the first port number indicating "445" has been accepted (YES in step S12) and executes connection processing for establishing a connection using TCP/445 port which is a specified port corresponding to the first port number indicating "445" (step S13).

### (1-1) Case Where Connection Has Been Established

When a connection has been established without any trouble, the controller 10 determines that a connection using TCP/445 port has been established (YES in step S14) and allows the communication device 22 to send, using the TCP/445 port, the generated image file to the shared folder as the set destination (step S15). After the processing in step S15, the controller 10 ends the first file transmission processing.

### (1-2) Case Where Connection Has Not Been Established

When any trouble has occurred, resulting in failure to establish a connection, the controller 10 determines that a connection using TCP/445 port cannot be established (NO in step S14) and determines whether or not connection processing has been executed twice (step S16).

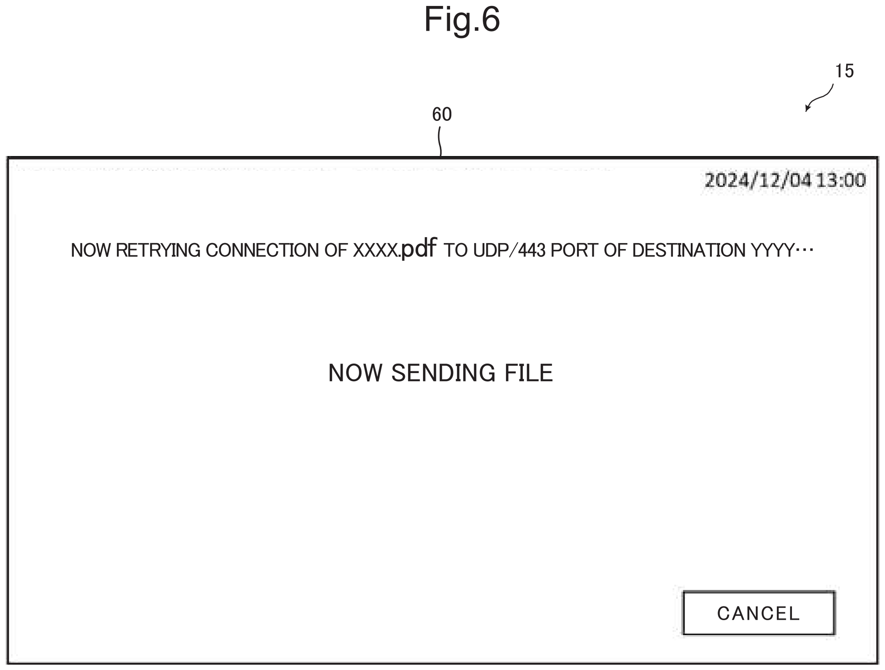

In the case of connection failure in the first round of connection processing, the controller 10 determines that connection processing has not yet been executed twice (NO in step S16) and allows the display device 15 to display a notification screen indicating the other port different from the specified port (TCP/445 port in this case) (step S17). In this case, as shown in FIG. 6, the controller 10 allows the display device 15 to display a notification screen 60 showing UDP/443 port as the other port.

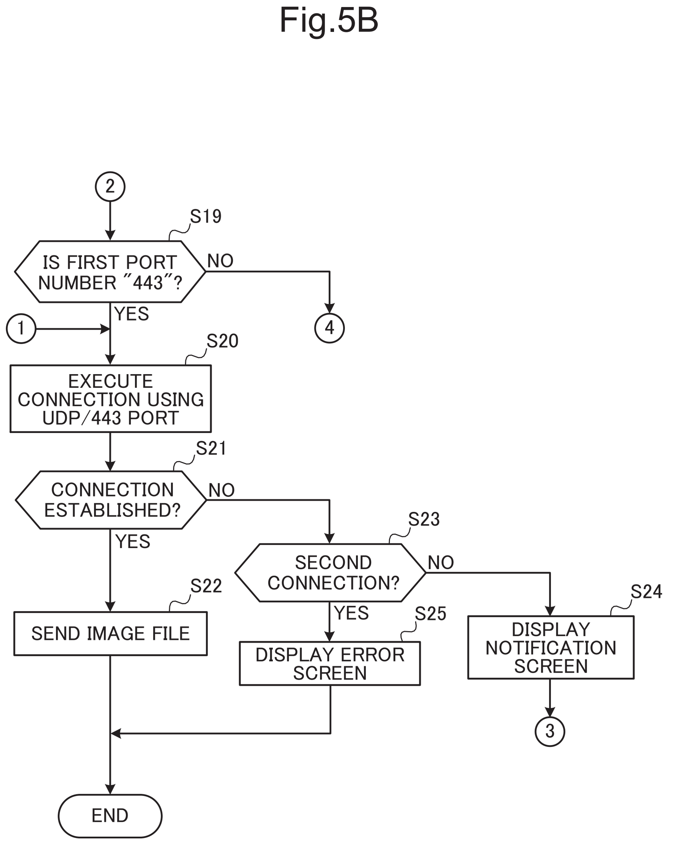

After the processing in step S17, the controller 10 goes to the processing in step S20 shown in FIG. 5B and executes connection processing for establishing a connection using UDP/443 port as the other port different from the specified port (step S20). The processing in step S21 and later steps will be described later.

On the other hand, in the case of connection failure in the second round of connection processing, the controller 10 determines that connection processing has been executed twice (YES in step S16) and allows the display device 15 to display an error screen indicating that establishment of a connection has failed without sending of the image file (step S18). After the processing in step S18, the controller 10 ends the first file transmission processing.

### (2) Case Where Specification of First Port Number Indicating "443" Has Been Accepted

Now assume that a first port number indicating "443" has been input by a user's input operation on the port number setting screen 40 through the touch panel 16B and the controller 10 has accepted the specification of the first port number indicating "443".

In this case, after the processing in step S11, the controller 10 determines that the specification of a first port number indicating "445" has not been accepted (NO in step S12), then determines that the specification of a first port number indicating "443" has been accepted (YES in step S19), and executes connection processing for establishing a connection using UDP/443 port which is a specified port corresponding to the first port number indicating "443" (step S20).

### (2-1) Case Where Connection Has Been Established

When a connection has been established without any trouble, the controller 10 determines that a connection using UDP/443 port has been established (YES in step S21) and allows the communication device 22 to send, using the UDP/443 port, the generated image file to the shared folder as the set destination (step S22). After the processing in step S22, the controller 10 ends the first file transmission processing.

### (2-2) Case Where Connection Has Not Been Established

When any trouble has occurred, resulting in failure to establish a connection, the controller 10 determines that a connection using UDP/443 port cannot be established (NO in step S21) and determines whether or not connection processing has been executed twice (step S23).

In the case of connection failure in the first round of connection processing, the controller 10 determines that connection processing has not yet been executed twice (NO in step S23) and allows the display device 15 to display a notification screen indicating the other port (TCP/445 port in this case) different from the specified port (UDP/443 port in this case) (step S24).

After the processing in step S24, the controller 10 goes to the processing in step S13 and executes connection processing for establishing a connection using TCP/445 port as the other port. After the processing in step S13, the controller 10 executes the processing in step S14 and later steps in the same manner as described previously.

On the other hand, in the case of connection failure in the second round of connection processing, the controller 10 determines that connection processing has been executed twice (YES in step S23) and allows the display device 15 to display an error screen indicating that establishment of a connection has failed without sending of the image file (step S25). After the processing in step S25, the controller 10 ends the first file transmission processing.

### (3) Case Where Specification of First Port Number Indicating Different Number Has Been Accepted

Now assume that a first port number indicating a different number other than "445" and "443" has been input by a user's input operation on the port number setting screen 40 through the touch panel 16B and the controller 10 has accepted the specification of the first port number indicating the different number.

In this case, after the processing in step S11, the controller 10 determines that the specification of a first port number indicating "445" has not been accepted (NO in step S12), then determines that the specification of a first port number indicating "443" has not been accepted (NO in step S19), and executes connection processing for establishing a connection using "TCP/the different number" port (for example, TCP/139 port, i.e., TCP port 139) which is a specified port corresponding to a first port number indicating the input different number (step S26).

### (3-1) Case Where Connection Has Been Established

When a connection has been established without any trouble, the controller 10 determines that a connection using "TCP/the different number" port has been established (YES in step S27) and allows the communication device 22 to send, using the "TCP/the different number" port (for example, TCP/139 port), the generated image file to the shared folder as the set destination (step S28). After the processing in step S28, the controller 10 ends the first file transmission processing.

### (3-2) Case Where Connection Has Not Been Established

When any trouble has occurred, resulting in failure to establish a connection, the controller 10 determines that a connection using "TCP/the different number" port cannot be established (NO in step S27) and determines whether or not connection processing has been executed twice (step S29).

In the case of connection failure in the first round of connection processing, the controller 10 determines that connection processing has not yet been executed twice (NO in step S29) and allows the display device 15 to display a notification screen 60 showing the other port (TCP/445 port in this case) different from the specified port ("TCP/the different number" port in this case) (step S30).

After the processing in step S30, the controller 10 goes to the processing in step S13 and executes connection processing for establishing a connection using TCP/445 port as the other port. After the processing in step S13, the controller 10 executes the processing in step S14 and later steps in the same manner as described previously.

On the other hand, in the case of connection failure in the second round of connection processing, the controller 10 determines that connection processing has been executed twice (YES in step S29) and allows the display device 15 to display an error screen indicating that establishment of a connection has failed without sending of the image file (step S31). After the processing in step S31, the controller 10 ends the first file transmission processing.

The general technique described previously requires a communication device loaded with software for determining a port scheduled to be used. However, depending on the communication device, it has difficulty in being loaded with software and, therefore, has difficulty in implementing the general technique. Furthermore, in the general technique described previously, the information receiving device notifies the communication device of an openable port. However, this configuration has a problem with security.

Unlike the above general technique, in the first embodiment, when accepting specification of a port number through the operation device 16, the controller 10 allows the communication device 22 to use a specified port corresponding to the specified port number to send an image file as to-be-sent data to a shared folder on the information processing device. Upon failure to establish a connection using the specified port, the controller 10 allows the communication device 22 to use another port different from the specified port to send the image file to the shared folder.

Since in this manner connection processing is executed using a specified port corresponding to a port number specified by the user, a port scheduled to be used can be determined safely and simply without any preparation of a separate device for determining a port scheduled to be used and without any notification of an openable port. In addition, since the port to be used can be flexibly changed according to the status of connection, a stable file transmission can be certainly achieved.

Furthermore, in the first embodiment, when accepting the specification of a port number indicating "445" through the operation device 16, the controller 10 allows the communication device 22 to send the image file to the shared folder using TCP/445 port as the specified port. When accepting the specification of a port number indicating "443" through the operation device 16, the controller 10 allows the communication device 22 to send the image file to the shared folder using UDP/443 port as the specified port. When accepting the specification of a port number indicating a different number other than "445" and "443" through the operation device 16, the controller 10 allows the communication device 22 to send the image file to the shared folder using "TCP/the different number" port as the specified port.

Thus, file transmission desired by the user can be stably achieved according to the use environment.

Moreover, in the first embodiment, when a connection using TCP/445 port cannot be established, the controller 10 allows the communication device 22 to send the image file to the shared folder using UDP/443 port as the other port. When a connection using UDP/443 port cannot be established, the controller 10 allows the communication device 22 to send the image file to the shared folder using TCP/445 port as the other port. When a connection using "TCP/the different number" port cannot be established, the controller 10 allows the communication device 22 to send the image file to the shared folder using TCP/445 port as the other port.

Thus, a change from the specified port to the other port can be smoothly made and, therefore, a stable file transmission can be more certainly achieved.

In addition, in the first embodiment, in executing a connection using the other port, the controller 10 allows the display device 15 to display a notification screen (for example, the notification screen 60) indicating the other port.

As just described, in the case where a connection using the other port different from the specified port is tried to be established, the user is notified of the port through which a connection is tried to be established. Therefore, the user convenience can be further increased.

Furthermore, in the first embodiment, when neither connection using the specified port nor connection using the other port can be established, the controller 10 keeps the communication device 22 from sending the image file. Thus, it can be prevented that connection processing is executed unnecessarily many times.

### (Second Embodiment)

The structure, configuration, and operation of an image forming apparatus 1 according to a second embodiment of the present invention are the same as those of the image forming apparatus 1 according to the first embodiment except for the points described below. Hereinafter, the image forming apparatus 1 according to the second embodiment will be described about different points from the image forming apparatus 1 according to the first embodiment.

In the image forming apparatus 1 according to the second embodiment, the HDD 18 holds, instead of the first transmission program, a second transmission program for use in executing second file transmission processing to be described hereinafter.

### [Operation]

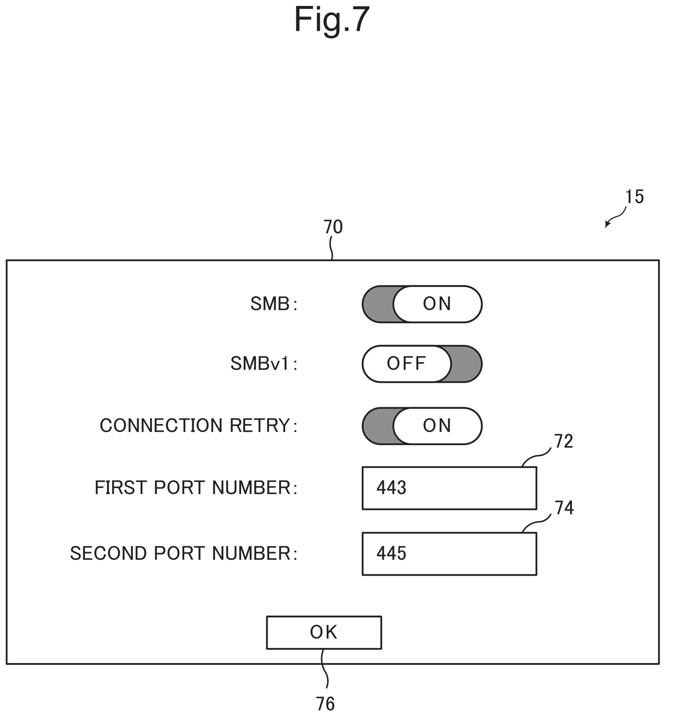

Hereinafter, a description will be given of the operation of the image forming apparatus 1 during execution and so on of the second file transmission processing with reference to FIGS. 7 to 9 and so on.

The controller 10 allows the display device 15 to display, instead of the above-described port number setting screen 40, a port number setting screen 70 shown in FIG. 7 for the purpose of setting port numbers. The user touches a region 72 on the port number setting screen 70 and inputs, using the touch panel 16B, a first port number (for example, "443") into the region 72. When accepting the input of the first port number through the touch panel 16B, the controller 10 allows the display device 15 to display the input first port number in the region 72.

Subsequently, the user touches a region 74 on the port number setting screen 70 and inputs, using the touch panel 16B, a second port number (for example, "445") having a priority next to the highest-priority first port number into the region 74. When accepting the input of the second port number through the touch panel 16B, the controller 10 allows the display device 15 to display the input second port number in the region 74. The second port number corresponds to the alternative port number defined in CLAIMS.

Assume that the user has confirmed the displayed first port number and second port number and has touched a determination key 76. When detecting a touch gesture on the determination key 76 through the touch panel 16B, the controller 10 accepts the specification of the input first port number and second port number.

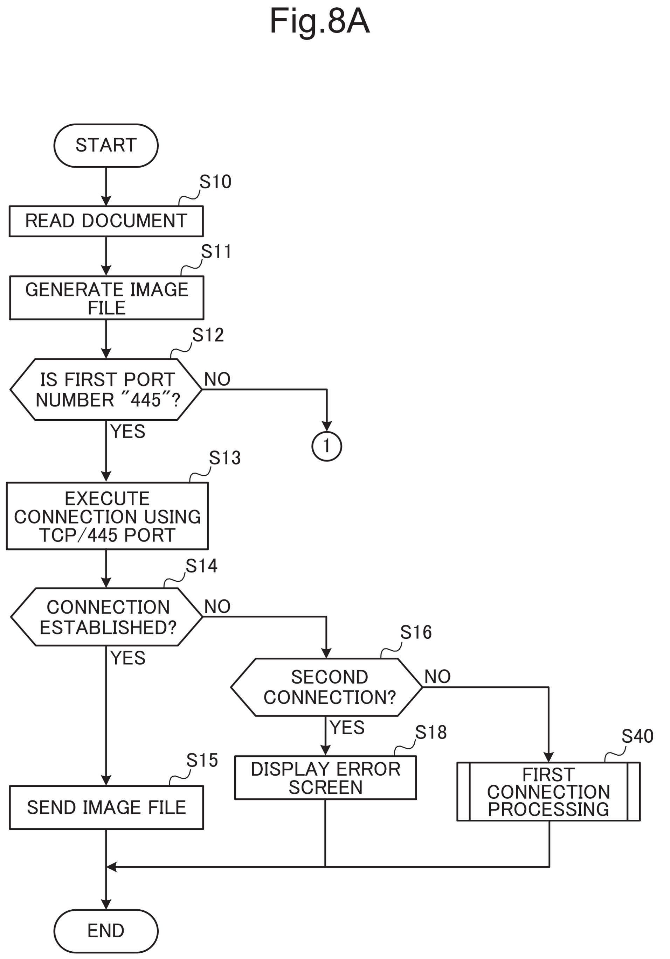

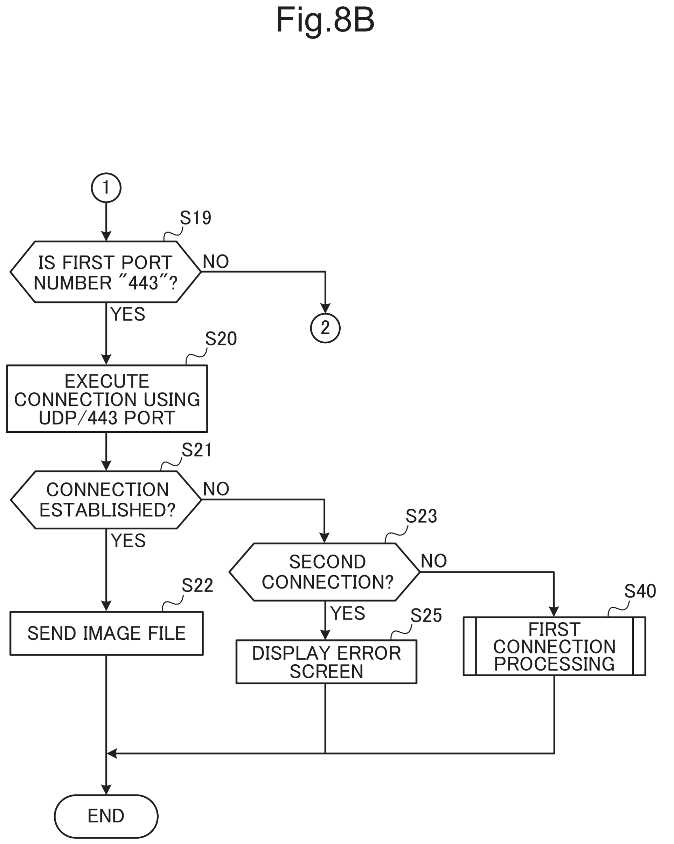

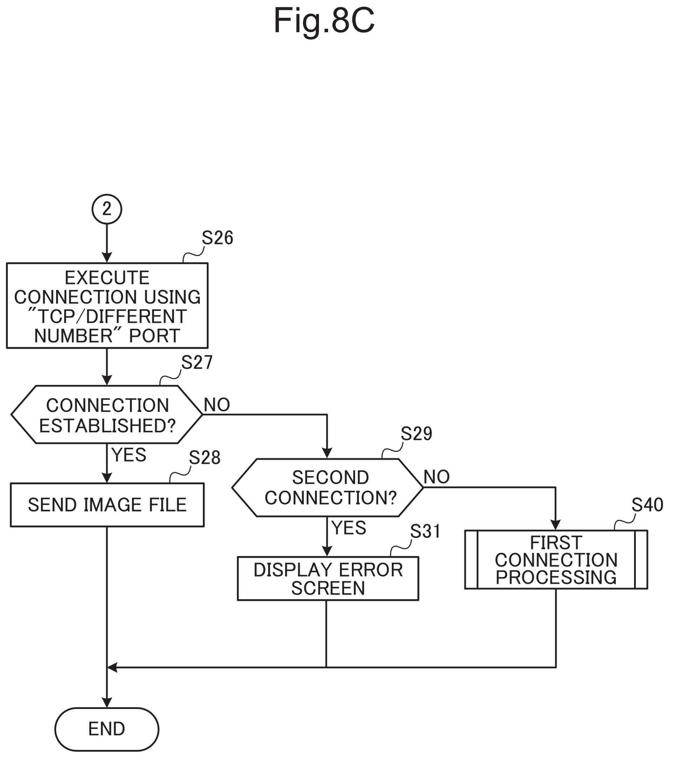

Next, assume that the user has placed a sheet of original document on the platen glass 7 of the image reading device 11 and has pressed the start key 16A. When detecting the pressing of the start key 16A, the controller 10 starts execution of the second file transmission processing shown in FIGS. 8A to 8C.

As shown in FIGS. 8A to 8C, the second file transmission processing is the same as the first file transmission processing except that first connection processing in step S40 is executed instead of the processing in steps S17, S24, and S30 in the first file transmission processing. Hereinafter, a description will be given of a processing procedure (i.e., the first connection processing) different from the first file transmission processing.

### (First Connection Processing)

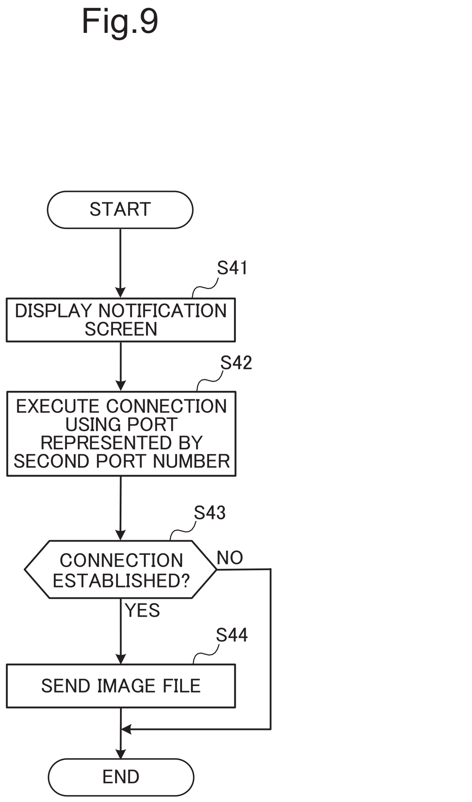

Referring to FIG. 9, in the first connection processing, the controller 10 first allows the display device 15 to display a notification screen indicating as the other port a port (for example, TCP/445 port) corresponding to the second port number (step S41). After the processing in step S41, the controller 10 executes connection processing for establishing a connection using as the other port the port corresponding to the second port number (step S42).

When a connection has been established without any trouble, the controller 10 determines that a connection using the port corresponding to the second port number has been established (YES in step S43) and allows the communication device 22 to send, using the port corresponding to the second port number, the generated image file to the shared folder as the set destination (step S44). After the processing in step S44, the controller 10 ends the first connection processing and ends the second file transmission processing.

On the other hand, when any trouble has occurred, resulting in failure to establish a connection, the controller 10 determines that a connection using the port corresponding to the second port number cannot be established (NO in step S43), ends the first connection processing, and ends the second file transmission processing.

In the second embodiment, in the case where a connection using a specified port corresponding to a first port number having the highest priority cannot be established and the controller 10 has further accepted through the operation device 16 a second port number (an alternative port number) having the second highest priority, the controller 10 allows the communication device 22 to send the image file to the shared folder using as the other port a port corresponding to the second port number (the alternative port number).

Thus, connection processing is executed according to the order of priority specified by the user, which enables file transmission desired by the user to be achieved even more safely and certainly.

### (First Modification)

Although in the second embodiment the second port number is specified prior to the execution of the second file transmission processing, the present invention is not limited to this embodiment. For example, the second port number may be specified in retrying the connection processing. In this case, for example, immediately before the first connection processing is executed, the controller 10 allows the display device 15 to display a screen for use in specifying the second port number. Then, when accepting the specification of the second port number through the operation device 16, the controller 10 starts executing the first connection processing.

### (Third Embodiment)

The structure, configuration, and operation of an image forming apparatus 1 according to a third embodiment of the present invention are the same as those of the image forming apparatus 1 according to the first embodiment except for the points described below. Hereinafter, the image forming apparatus 1 according to the third embodiment will be described about different points from the image forming apparatus 1 according to the first embodiment.

In the image forming apparatus 1 according to the third embodiment, the HDD 18 holds, instead of the first transmission program, a third transmission program for use in executing third file transmission processing to be described hereinafter. The HDD 18 further holds history information indicating ports through which connections have ever been established by SMB transmission.

### [Operation]

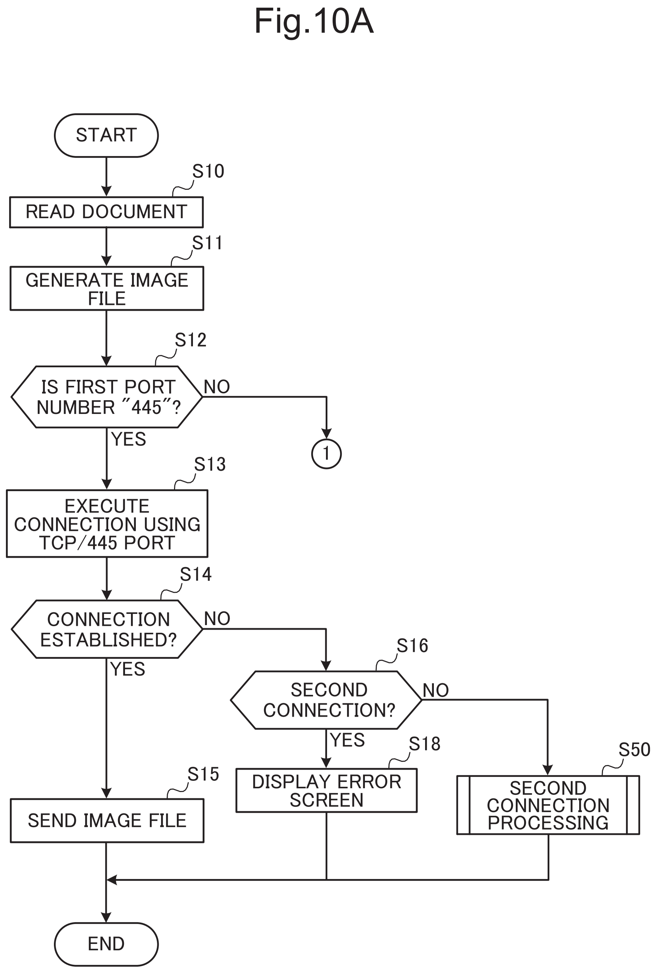

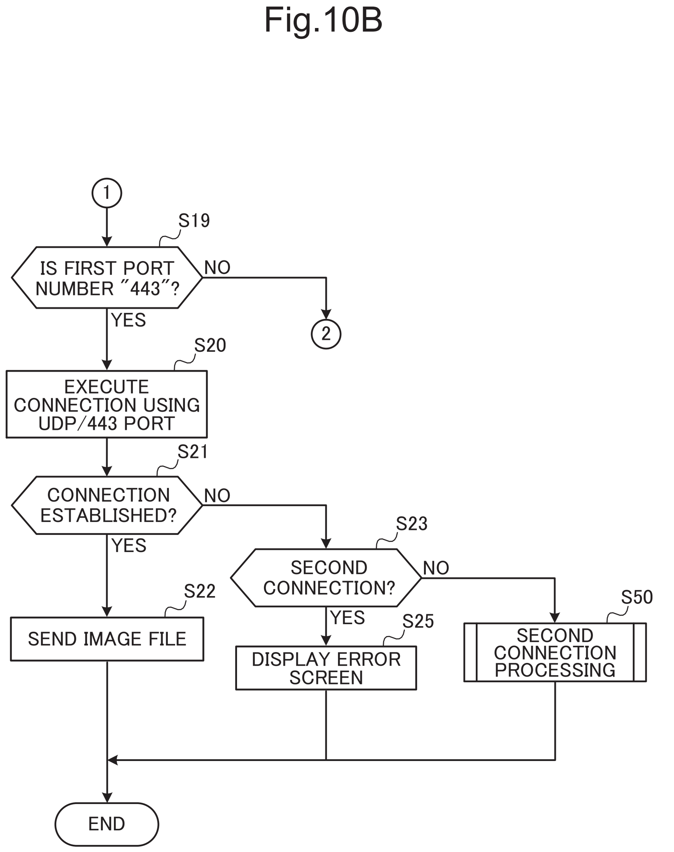

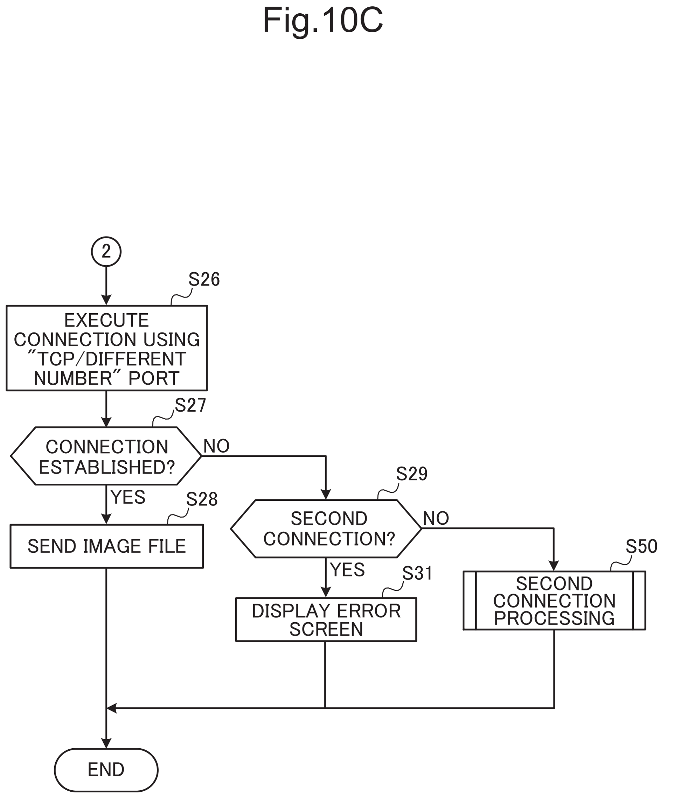

Hereinafter, a description will be given of the operation of the image forming apparatus 1 during execution and so on of the third file transmission processing with reference to FIGS. 10A to 11 and so on.

Assume that, like the first embodiment, the user has made the setting of the destination of the image file and the specification of the first port number, has placed a sheet of original document on the platen glass 7 of the image reading device 11, and has pressed the start key 16A. When detecting the pressing of the start key 16A, the controller 10 starts execution of the third file transmission processing shown in FIGS. 10A to 10C.

As shown in FIGS. 10A to 10C, the third file transmission processing is the same as the first file transmission processing except that second connection processing in step S50 is executed instead of the processing in steps S17, S24, and S30 in the first file transmission processing. Hereinafter, a description will be given of a processing procedure (i.e., the second connection processing) different from the first file transmission processing.

### (Second Connection Processing)

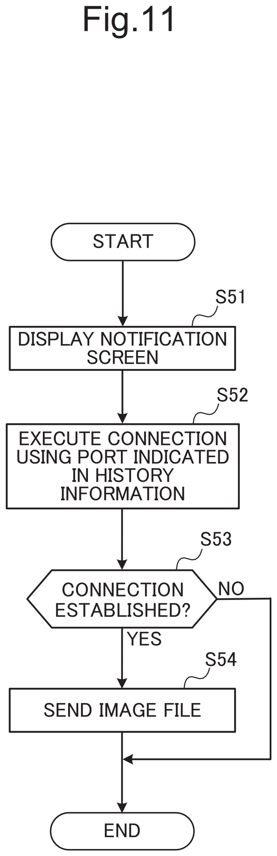

Referring to FIG. 11, in the second connection processing, the controller 10 first allows the display device 15 to display a notification screen indicating as the other port a port (for example, TCP/445 port) indicated in the history information (step S51). After the processing in step S51, the controller 10 executes connection processing for establishing a connection using as the other port the port indicated in the history information (step S52).

When a connection has been established without any trouble, the controller 10 determines that a connection using the port indicated in the history information has been established (YES in step S53) and allows the communication device 22 to send, using the port indicated in the history information, the generated image file to the shared folder as the set destination (step S54). After the processing in step S54, the controller 10 ends the second connection processing and ends the third file transmission processing.

On the other hand, when any trouble has occurred, resulting in failure to establish a connection, the controller 10 determines that a connection using the port indicated in the history information cannot be established (NO in step S53), ends the second connection processing, and ends the third file transmission processing.

In the third embodiment, when a connection using the specified port cannot be established, the controller 10 allows the communication device 22 to send the image file to the shared folder using as the other port a port indicated in the history information.

Thus, connection processing is retried through a port having a higher possibility for establishment of a connection. As a result, a more stable file transmission can be achieved.

### (Other Modifications)

Although in the above embodiments an image file in PDF (portable document format) format is generated from image data, the present invention is not limited to these embodiments. For example, the controller 10 may generate an image file in JPEG (joint photographic experts group), TIFF (tagged image file format) or XPS (XML paper specification) format.

The present invention is not limited to the structure of the above embodiments and can be modified in various ways. For example, in the above embodiments, a multi-color multifunction peripheral is used as the image forming apparatus 1. However, this is merely illustrative and other types of image forming apparatuses, including a black-and-white multifunction peripheral, a copier, and a facsimile device, may be used.

Although in the above embodiments an image file is used as to-be-sent data, the present invention is not limited to these embodiments. For example, a document file may be used as to-be-sent data.

The structure. configuration, and processing of the above embodiments described with reference to FIGS. 1 to 11 are merely illustrative of the present invention and are not intended to limit the present invention to them.

## Claims

1. An image reading apparatus (2) comprising:
an operation device (16) through which a user's instruction is to be input;
a communication device (22) that performs communications via a network with an information processing device; and
a control device (100) that comprises a processor and functions, through the processor executing a control program, as a controller (10) that accepts specification of a port number through the operation device (16), allows the communication device (22) to use a specified port corresponding to the specified port number to send to-be-sent data to a shared folder on the information processing device, and, upon failure to establish a connection with the information processing device using the specified port, allows the communication device (22) to use another port different from the specified port to send the to-be-sent data to the shared folder.

2. The image reading apparatus (2) according to claim 1, wherein
when accepting specification of a port number indicating "445" through the operation device (16), the controller (10) allows the communication device (22) to send the to-be-sent data to the shared folder using TCP/445 port as the specified port,
when accepting specification of a port number indicating "443" through the operation device (16), the controller (10) allows the communication device (22) to send the to-be-sent data to the shared folder using UDP/443 port as the specified port, and
when accepting specification of a port number indicating a different number other than "445" and "443" through the operation device (16), the controller (10) allows the communication device (22) to send the to-be-sent data to the shared folder using "TCP/the different number" port as the specified port.

3. The image reading apparatus (2) according to claim 2, wherein
when a connection using the TCP/445 port cannot be established, the controller (10) allows the communication device (22) to send the to-be-sent data to the shared folder using the UDP/443 port as the other port different from the specified port,
when a connection using the UDP/443 port cannot be established, the controller (10) allows the communication device (22) to send the to-be-sent data to the shared folder using the TCP/445 port as the other port different from the specified port, and
when a connection using the "TCP/the different number" port cannot be established, the controller (10) allows the communication device (22) to send the to-be-sent data to the shared folder using the TCP/445 port as the other port different from the specified port.

4. The image reading apparatus (2) according to any of claims 1 to 3,
further comprising a display device (15),
wherein in executing a connection using the other port, the controller (10) allows the display device (15) to display a screen indicating the other port.

5. The image reading apparatus (2) according to any of claims 1 to 4, wherein when neither connection using the specified port nor connection using the other port can be established, the controller (10) keeps the communication device (22) from sending the to-be-sent data.

6. The image reading apparatus (2) according to any of claims 1 to 5, wherein when a connection using the specified port cannot be established and the controller (10) has further accepted an alternative port number through the operation device (16), the controller (10) allows the communication device (22) to send the to-be-sent data to the shared folder using as the other port a port corresponding to the alternative port number.

7. The image reading apparatus (2) according to any of claims 1 to 5,
further comprising a storage device (18) that stores history information indicating a port through which a connection has ever been established,
when a connection using the specified port cannot be established, the controller (10) allows the communication device (22) to send the to-be-sent data to the shared folder using as the other port the port indicated in the history information.

8. The image reading apparatus (2) according to any of claims 1 to 7,
further comprising an image reading device (11) that reads an original document and generates image data from the original document,
wherein the controller (10) generates an image file from the image data and uses the image file as the to-be-sent data.

9. The image reading apparatus (2) according to claim 5,
further comprising a display device (15),
wherein when neither connection using the specified port nor connection using the other port can be established, the controller (10) allows the display device (15) to display an error screen indicating that establishment of a connection has failed.
